# EUROPÄISCHE PATENTANMELDUNG

(11) **EP 3 614 088 A1**
(43) Veröffentlichungstag der Anmeldung: **26.02.2020**
(21) Anmeldenummer: 19000363.2
(22) Anmeldetag: 05.08.2019
(51) Int. Cl.: F28D 9/00, F28F 3/04

(54) **WÄRMETAUSCHER MIT JEWEILS UNTERSCHIEDLICH GEFORMTEN, INEINANDERRAGEND PROFILIERTEN PLATINEN**

(30) Priorität: 10.08.2018 DE 102018006453
(71) Anmelder: Paul, Eberhard, 08132 Mülsen (DE)
(72) Erfinder: Paul, Eberhard, 08132 Mülsen (DE)
(74) Vertreter: Patentanwälte Findeisen Neumann Scheit Partnerschaft mbB

(57) **Zusammenfassung**

Wärmetauscher aus übereinander angeordneten undmäanderförmig profilierten Platinen, wobei zwei unterschiedlich profilierte Platinen ineinander ragen. Dabei liegen zwei rechteckförmige Platinen (mit einfacher Profilhöhe) übereinander. Eine dazwischen gelegte zickzackförmige Platine (mit doppelter Profilhöhe) ragt mit ihren Spitzen von unten und oben mit ihren Spitzen in die Rechtecke der benachbarten Rechteck-Profile hinein.

Alternativ kann zum Zickzackprofil an Stelle der Dreiecke eine "Hausform" eingesetzt werden; eine Spitzdach-Form oder Pultdach-Form. Die Profile können auch einen (in Strömungsrichtung gesehenen) zickzackförmigen Verlauf nehmen. Zur Verbesserung des Kondensatablaufs sind die Profilspitzen kürzer, wodurch diese nicht in den Bereich des ablaufenden Kondensats hineinragen.

## Beschreibung

Die Erfindung betrifft eine Wärmetauscherplatine gemäß dem Oberbegriff des Patenanspruchs.

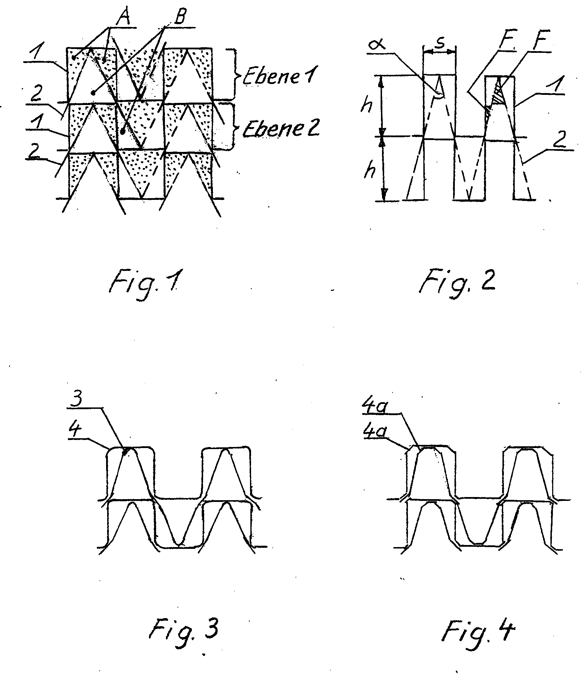

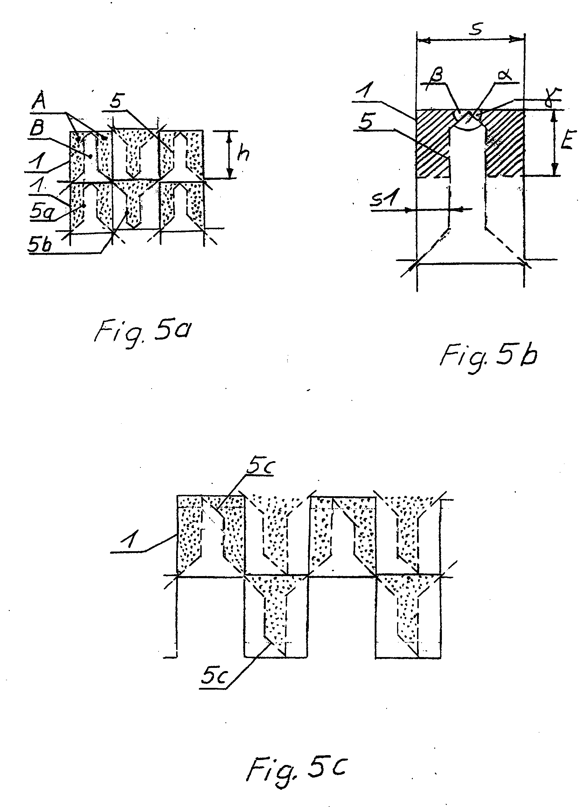

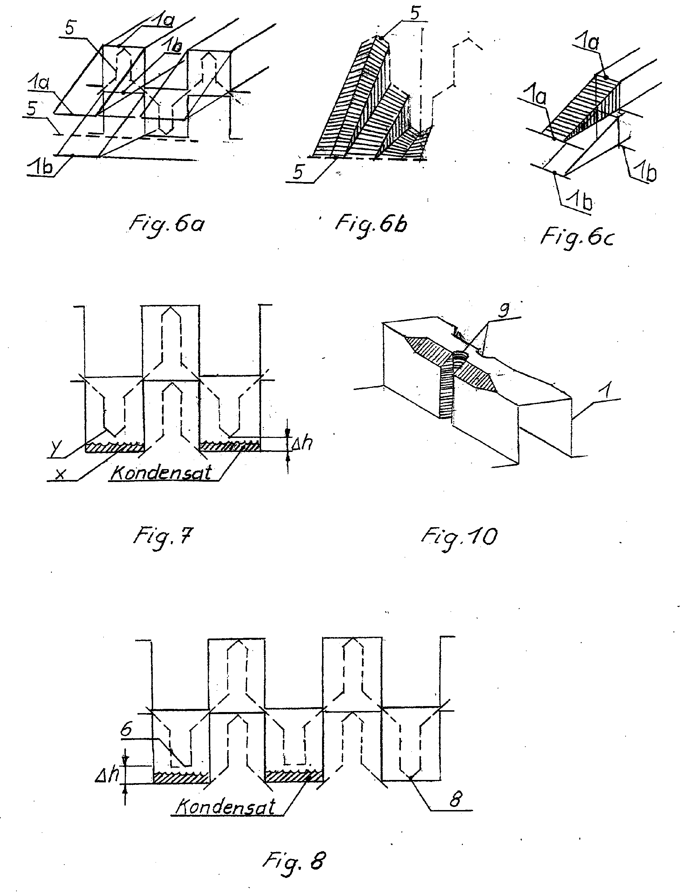

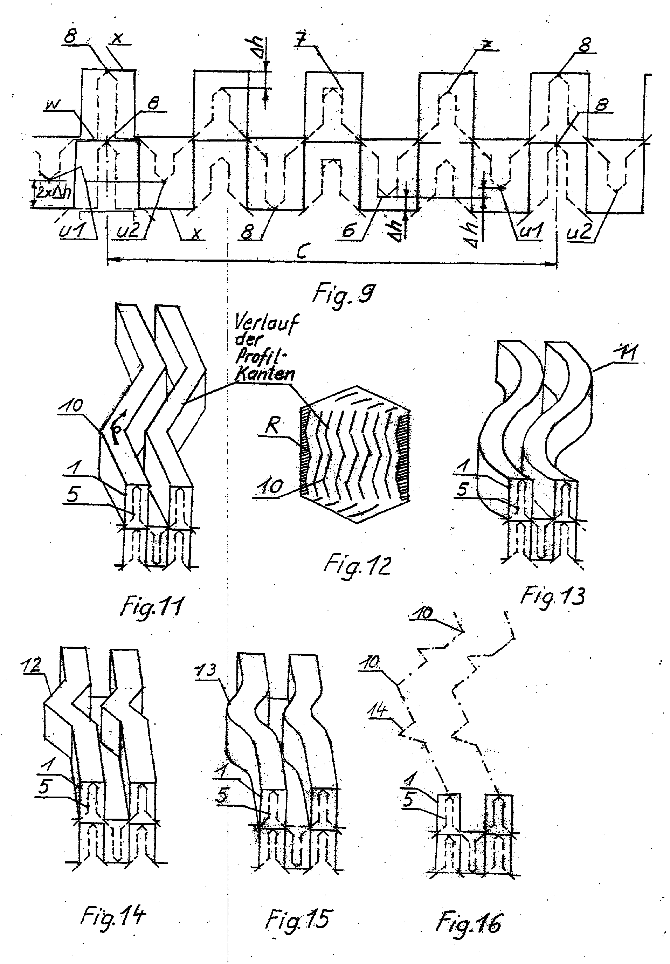

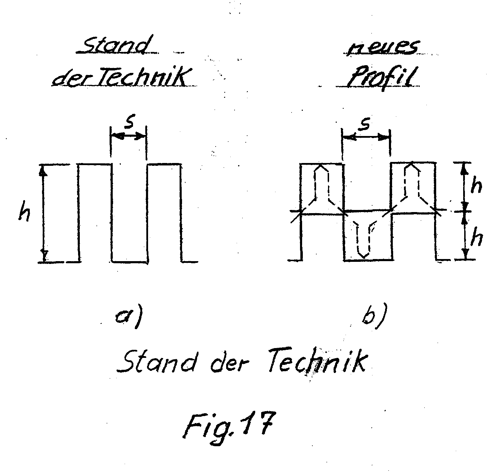

Aus DE10329153 ist eine Wärmetauscherplatine bekannt, deren paralleles Kanalprofil aus Rechteckformen gebildet ist.
Außerdem sind ein Gebrauchsmuster DE29620248 und ein Patent DE19635552 mit einer Zickzackprofilform bekannt.
Die erreichbare Wärmetauschfläche der jeweils o. g. beiden Profile erreicht nicht die Fläche des neuartigen Profils, bei dem beide Profile (1, 2) ineinander gesteckt (Fig. 1) sind (Addition beider Profilflächen!).
Bekanntlich kann die Wärmetauschfläche durch eine kleine Profilbreite (s) (Fig. 17a) erhöht werden. Dies stößt allerdings an Grenzen beim Entformen des Rechteckprofils im Tiefziehprozess. Dieses Problem kann durch das Ineinanderstecken zweier unterschiedlicher Profile gelöst werden (Fig. 1 bis 5c), wobei zwei rechteckförmige (oder rechteckähnliche) Platinen (1) in zwei Ebenen aufeinander liegen und eine dazwischengelegte zickzackförmige Platine (2) mit ihren Spitzen in die Rechtecke hineinragt.
Zur Erreichung einer hohen Wärmetauschfläche muss dabei die Profilbreite (s) nicht so stark reduziert werden, da die Fläche bereits durch das hineingesteckte Zickzackprofil deutlich steigt.
Bei großen Profilhöhen (h) und gleichzeitig kleiner Profilbreite (s) wird beim Zickzackprofil (2) der Winkel α allerdings recht klein. Dies führt im Bereich des spitzen Winkels zu einem sehr engen Strömungsquerschnitt (F) (Fig. 2). Durch die höhere Gleitreibung an der Wandung bezogen auf den engen Strömungsquerschnitt sinkt in diesem engen Querschnittsbereich die Strömungsgeschwindigkeit und somit die Wärmeübertragungszahl; der Druckverlust steigt.
Zur Lösung dieses Problems wird in einer zweiten neuartigen Profilvariante das (spitze) Dreieck (2) durch eine "Hausform" (Fig. 5a bis c) ersetzt: Spitzdach (5b) oder Pultdach (5c). Hier wird durch die parallelen Flanken (rechte und linke "Hauswand") der Rechteck-Bereich in drei parallele, schmale Zonen (Fig. 5b) aufgeteilt, die beidseitig jeweils einen guten Wärmefluss ermöglichen (kurzer Wärmestrom-Weg). Außerdem entfällt der spitze Winkel - er wird durch eine "Hausdach-Form" ersetzt. Hierdurch wird es möglich, dass die Winkel (α = 90° oder α = β = γ = 60°) deutlich bessere Strömungsverhältnisse zulassen (Fig. 5b). Außerdem kann durch diese "Haus-Form" die Wärmetauschfläche gegenüber der DreieckForm (dem Zickzackprofil (Fig. 1 und 2)) gesteigert werden. Für alle vier neuartigen Profilvarianten (Fig. 1, 3, 5a, 5c) gilt, dass die Summe beider Strömungs-Querschnittsflächen (A = B) identisch ist.
Durch die Abrundung (3, 4) oder Abflachung (4a) (Fig. 3 und 4) der Ecken kann ein besserer Tiefzieh-Erfolg erreicht werden, d. h. Ausdünnen und Löcher im Tiefziehmaterial können weitgehend vermieden werden. Die bogenförmigen Wölbungen (3) können auch dazu dienen, die Strömungsquerschnittsflächen (ΣA = ΣB) anzugleichen oder bei unterschiedlich großen Volumenströmen bewusst ungleich zu gestalten(Fig. 3).
Durch einen (in Strömungsrichtung gesehenen) zickzackförmigen (6) oder sinuskurvenähnlichen (7) Verlauf der Profilstruktur (Fig. 11 bis 13) lässt sich die Länge des Strömungsfadens und damit die Verweildauer und Wärmetauschdauer erhöhen, was zur Verbesserung der Wärmetauschleistung führt. Die Wärmetauschfläche vergrößert sich durch die Zickzackstruktur (Fig. 11) um ca. 6 %, wobei bereits die Flächenverluste im Randbereich (R) (Fig. 12) einkalkuliert sind.
Bei einem (in Strömungsrichtung gesehenen) zickzackförmigen Profilverlauf (6) wird die Wärmeübergangszahla durch Turbulenzen (Fig. 11) erhöht. Dabei verlaufen die übereinanderliegenden Profile (1 + 2 bzw. 1 + 5) synchron.
Zur Verbesserung des Wärmerückgewinnungsgrades und des Druckverlustes sowie zur Minderung der Einfriergefahr ist ein gutes Abfließen des Kondensats im Wärmetauscherprofil vorteilhaft. Zu diesem Zweck kann das erfindungsgemäße Profil derart abgewandelt werden, dass die mit der Spitze nach unten gerichteten Profilelemente (y) nicht bis in die "Kondensatwanne" (x) hineinragen, sondern durch eine Verkürzung der Profilhöhe um Δh (Fig. 7,8) die Profilspitze (y) über der "Kondensatwanne" (x) schwebt.
Bei Wärmetauschern mit senkrecht angeordnetem Profil und der Möglichkeit, dass beidseitig (Medium A und B) Kondensat anfallen kann (z. B. bei der Wohnungslüftung: A= Abluft im Winter; B=Aussenluft über Erdwärmetauscher im Sommer) ist es sinnvoll, beidseitig (also "unten" und "oben") eine "Kondensatwanne" vorzusehen (Fig. 9).
Daher wird die Δh-Verkürzung auch bei der nach "oben" zeigenden Profilspitze (z) vorgenommen (Fig. 9).
Die damit verbundene Verringerung der Wärmetauschfläche ist geringer als der Gewinn an effektiver Wärmetauschfläche durch besser abfließendes Kondensat und damit freiwerdender Wärmetauschfläche. Dies gilt für eine solche Konstruktion, bei der die Δh-Verkürzung der Profilspitzen nur auf diesen Streckenabschnitt am Ende des Wärmetauschers (in Strömungsrichtung des auskondensierenden Luftstromes) begrenzt ist, bei dem Kondensation (It. Berechnung oder Test) zu erwarten ist.
Eine weitere Erhöhung der Wärmetauschfläche kann dadurch erreicht werden, wenn die verkürzte Spitze in ein Rechteck (6, 7) gewandelt wird (Fig. 8 und 9).

Zur Arretierung der profilierten Platinen ist im erforderlichen Abstand C ein Aufsitz (w und/ oder 8) (8 als Spitz- oder Pultdach) zur benachbarten Platine hin erforderlich (Fig. 9). Die beiden zum Aufsitz (w oder 8) benachbarten Profilelemente (u1, u2) sind vorteilhafterweise verkürzt (z. B. um Δh), um nicht (wegen des Aufsitzes (w) oder 8)) die Tiefziehhöhe vergrößern zu müssen. Der Aufsitz (w oder 8) kann auch auf einen kurzen Streckenabschnitt (I) begrenzt sein. Die Profil-Varianten mit der Profilhöhen-Verkürzung (Δh) sind neben des verbesserten Kondensatabflusses auch sinnvoll hinsichtlich der Vergrößerung des Abstandes (h) (Abstand der profilierten Platinen), wodurch die Anzahl an Platinen für einen Wärmetauscher reduziert werden kann (wirtschaftlicher Vorteil).
Zur Verbesserung des kanalisierten Kondensatablaufes können im Rechteckprofil (1) beidseitig Ablauf-Rinnen (9) eingeformt werden, die sich im erforderlichen Abstand wiederholen (Fig. 10).
Durch den in Strömungsrichtung gesehenen zickzackförmigen Profilverlauf wird insbesondere bei großen Profilhöhen auch der in größerer Profiltiefe befindliche Strömungsbereich E (Fig. 5b) verwirbelt, bewirkt durch die häufige Umlenkung an den Ecken (6) (Fig. 11, 12, 16).
Der Vorteil der Verwirbelung kann auch durch V-förmige Ausbuchtungen (8, 10) erreicht werden (Fig. 14, 16). Die V-förmigen Ausbuchtungen (8) verlaufen bei allen übereinanderliegenden Platinen synchron.
Die V-förmigen Ausbuchtungen können dabei auch bogenförmig (9) ausgeführt sein (U-Form) (Fig. 15).
Die Verteilung der Medien in die Profile (Kanalverteiler) wird in Fig. 6 dargestellt.

### Bezugszeichenliste

- 1, 1a, 1b: Wärmetauscher-Platine mit Rechteckprofil - übereinanderliegend
- 2: Wärmetauscher-Platine mit Zickzackprofil, welches in die beiden benachbarten Rechteckprofile (1) hineinragt
- 3: Abrundung am Zickzackprofil
- 4: Abrundung am Rechteck-Profil
- 4a: Abflachung am Zickzack- und Rechteckprofil
- 5: Profilform ähnlich einer Hausform mit Spitzdach
- 5a: Spitzdach-Form, nach oben zeigend
- 5b: Spitzdach-Form, nach unten zeigend
- 5c: Pultdach-Form, nach unten und oben zeigend
- 6: Rechteck an Stelle des Spitzdaches, nach unten zeigend
- 7: Rechteck an Stelle des Spitzdaches, nach oben zeigend
- 8: Aufsitz
- 9: Kondensat-Ablaufrinne
- 10: zickzackförmiger Verlauf der Profilstruktur
- 11: sinuskurvenähnlicher Verlauf der Profilstruktur
- 12: V-förmige Ausbuchtung
- 13: U-förmige Ausbuchtung
- 14: V-förmige Ausbuchtung bei ansonsten zickzackförmigem Profilverlauf

- A: erstes Medium
- B: zweites Medium
- C: seitlicher Abstand innerhalb einer Platinen-Breite, nach der sich der Aufsitz wiederholt
- E: Teil des Strömungsquerschnitts, der bei größerer Profiltiefe im hinteren Bereich liegt
- F: Strömungsquerschnitt im spitzen Winkel-Bereich
- P: eine Periode
- R: Randbereich der profilierten Platine

- h: Profilhöhe
- I: Länge des Aufsitzes
- u1, u2: neben dem Aufsitz (w) beidseitig benachbarte Profilelemente (verkürzt wegen Tiefziehhöhe)
- s: Profilbreite
- s1: Spaltbreite
- w: Aufsitz-Arretierung zur benachbarten Platine
- x: Kondensatwanne
- y: Spitze am Spitzdach, nach unten zeigend, um Δh verkürzt, über der "Kondensatwanne" (x) schwebend
- z: Spitze am Pultdach, nach oben zeigend, um Δh verkürzt

- α: eingeschlossener Winkel des Dreiecks
- β, γ: spitzer Winkel zwischen Spitzdach und Horizontaler des Rechteckelementes
- Δh: Maß für die Profilhöhen-Verkürzung

## Patentansprüche

1. Wärmetauscher aus übereinander angeordneten profiliertenWärmetauscherplatinen, wobei die übereinander angeordneten Platinen durch ihren mäanderförmigen Verlauf parallele Strömungskanäle bilden, **dadurch gekennzeichnet, dass** jeweils zwei unterschiedlich geformte Platinen ineinander ragen, wobei zwei rechteckförmige (oder rechteckähnliche) Platinen(1) in zwei Ebenen aufeinander liegen und eine dazwischen gelegte zickzackförmige Platine (2) mit ihren Spitzen in die Rechtecke hineinragt.

2. Wärmetauscher nach Anspruch 1, **dadurch gekennzeichnet, dass** an Stelle der Spitzen (2) eine Profilform ähnlich einer Hausform (5, 5c) (mit Spitzdach nach oben (5a) und unten (5b) zeigend oder mit Pultdach (5c) verwendet wird.

3. Wärmetauscher nach Anspruch 1 bis 2, **dadurch gekennzeichnet, dass** die Ecken der Profile alternativ abgerundet (3, 4) oder abgeflacht (4a) sind zur Verbesserung der Tiefziehfähigkeit.

4. Wärmetauscher nach Anspruch 1 bis 3, **dadurch gekennzeichnet, dass** (zumindest in dem Streckenabschnitt des Wärmetauschers, in dem eine Kondensatbildung zu erwarten ist) zur Verbesserung des Kondensatablaufes die Profilspitzen (y, z) nicht an der benachbarten Platine anstoßen, sondern durch den Abstand Δh ausreichend Platz zum (an der Nachbarplatine) ablaufenden Kondensat in der "Kondensatwanne" (x) gegeben ist. Im erforderlichen Abstand C ist zur Arretierung der profilierten Platinen zueinander ein Aufsitz (w und/ oder 8) erforderlich, alternativ nur über einen kurzen Streckenabschnitt des Wärmetauschers, wobei die zum Aufsitz (w, 8) jeweils benachbarten Profilelemente (u1, u2) gekürzt (z. B. um Δh) werden sollten, um nicht (wegen des Aufsitzes (w, 8)) die Tiefziehhöhe vergrößern zu müssen. Außerdem können zur Verbesserung des kanalisierten Kondensatablaufes im Rechteckprofil (1) beidseitig Ablaufrinnen (9) eingeformt werden.

5. Wärmetauscher nach Anspruch 1 bis 4, **dadurch gekennzeichnet, dass** die Profilstruktur in Strömungsrichtung gesehen einen zickzackförmigen (6) oder sinuskurvenähnlichen (7) Verlauf nimmt, wobei die Profilstruktur bei allen übereinanderliegenden Platinen synchron verläuft.

6. Wärmetauscher nach Anspruch 1 bis 5, **dadurch gekennzeichnet, dass** die Profilstruktur in Strömungsrichtung gesehen einen V-förmig ausgebauchten Verlauf (8, 10) nimmt, sowohl bei (ansonsten) geradem Profilverlauf (8) als auch bei Zickzackprofil (10). Die V-förmigen Ausbuchtungen können dabei an den Kanten auch abgerundet (9) sein (U-Form).
